(19) Europäisches Patentamt
European Patent Office
Office européen des brevets

(11)  **EP 3 788 279 B1**

(12)  **EUROPÄISCHE PATENTSCHRIFT**

(45) Veröffentlichungstag und Bekanntmachung des Hinweises auf die Patenterteilung:
**09.02.2022  Patentblatt 2022/06**

(21) Anmeldenummer: **19721210.3**

(22) Anmeldetag: **15.04.2019**

(51) Internationale Patentklassifikation (IPC):
*F16H 61/4192* *(2010.01)*

(52) Gemeinsame Patentklassifikation (CPC):
**F16H 61/4192;** F16H 2059/6861; F16H 2059/6876;
F16H 2312/04

(86) Internationale Anmeldenummer:
**PCT/EP2019/059694**

(87) Internationale Veröffentlichungsnummer:
**WO 2019/211088 (07.11.2019 Gazette 2019/45)**

(54) **ELEKTRONISCHES ÜBERWACHUNGSSYSTEM FÜR HYDROSTATISCHE FAHRANTRIEBE UND FAHRANTRIEB MIT ELEKTRONISCHEM ÜBERWACHUNGSSYSTEM**

ELECTRONIC MONITORING SYSTEM FOR HYDROSTATIC TRAVEL DRIVES AND TRAVEL DRIVE WITH ELECTRONIC MONITORING SYSTEM

SYSTÈME DE SURVEILLANCE ÉLECTRONIQUE POUR DES SYSTÈMES D'ENTRAÎNEMENT HYDROSTATIQUES ET SYSTÈME D'ENTRAÎNEMENT ÉQUIPÉ D'UN SYSTÈME DE SURVEILLANCE ÉLECTRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.05.2018   DE 102018206908**

(43) Veröffentlichungstag der Anmeldung:
**10.03.2021   Patentblatt 2021/10**

(73) Patentinhaber: **Robert Bosch GmbH**
**70442 Stuttgart (DE)**

(72) Erfinder:
 • **MUELLER, Matthias**
   **89129 Langenau (DE)**

 • **HENSE, Heinz**
   **89231 Neu-Ulm (DE)**
 • **FEIG, Juergen**
   **89346 Bibertal (DE)**
 • **MUMCU, Peer**
   **89073 Ulm (DE)**
 • **HERRMANN, Ronny**
   **89233 Neu-Ulm (DE)**
 • **ARENAS, Veronica**
   **89073 Ulm (DE)**

(56) Entgegenhaltungen:
DE-A1- 10 303 206        DE-A1-102005 009 929
DE-A1-102008 021 313     DE-A1-102015 209 333

**Beschreibung**

Die vorliegende Offenbarung betrifft ein elektronisches Überwachungssystem für hydrostatische Fahrantriebe für Fahrzeuge zur Realisierung von Sicherheitsfunktionen und einen entsprechenden Fahrantrieb.

Die DE 10 2008 021 313 A1 offenbart ein Hydraulikkomponenten-Steuergerät und ein Verfahren zum Ansteuern von hydraulischen Komponenten wie z.B. Fahrantrieben von mobilen Arbeitsmaschinen. Dabei überwachen sich eine Steuerungsfunktion und eine Überwachungsfunktion gegenseitig.

Aus dem Stand der Technik sind weiterhin elektronische Überwachungssysteme bekannt, bei denen der betroffene hydrostatische Fahrantrieb über das Drehzahlsignal des hydrostatischen Motors überwacht wird um Sicherheitsfunktionen zu realisieren. Außerdem sind Fahrantriebe bekannt, bei denen der Ansteuerstrom für die hydrostatische Pumpe überwacht wird. Verwandte Überwachungskonzepte sind im Automobilbereich unter dem Namen "EGAS-Überwachungskonzept" oder "3-Ebenen-Konzept" bekannt.

Für die normierte Sicherheitsfunktion "Sicherer Stillstand" die auch als sichere Antriebslosigkeit bezeichnet werden kann, werden Fahrereingaben ausgewertet, beispielsweise die Fahrpedalposition und die gewählte Fahrtrichtung. Nachdem der Fahrer bei stehendem Fahrzeug z.B. durch das Loslassen des Fahrpedals oder durch die Wahl der Fahrrichtung "neutral" Stillstand bzw. Antriebslosigkeit anfordert, darf der hydrostatische Fahrantrieb kein aktives Antriebsmoment erzeugen, damit das Fahrzeug nicht ungewollt anfährt.

Bei der oben genannten Lösung wird nur das Drehzahlsignal des hydrostatischen Motors für die Überwachung genutzt. Mit diesem Signal kann aber nicht unterschieden werden, ob das Fahrzeug sich ungewollt bewegt, weil der hydrostatische Fahrantrieb ein aktives Antriebsdrehmoment erzeugt, was als Fehlerzustand erkannt werden soll, oder ob sich das Fahrzeug nur auf Grund von externen Kräften wie der Hangabtriebskraft oder der Massenträgheit in grundsätzlich zulässiger Weise bewegt, was keinen Fehlerzustand darstellt. Damit ist die Erkennung von Fehlerzuständen bei Überwachungssystemen aus dem Stand der Technik eingeschränkt und lässt sich nur bei bestimmten Fahrzeugtypen sinnvoll einsetzen (z.B. Kommunalfahrzeug mit Parkbremse). Außerdem ist eine Verwendung für sehr dynamische Fahrzeuge, wie z.B. Radlader im Haufwerk, nicht möglich, da fehlerhafte Zustände und nicht fehlerhafte Zustände nicht unterschieden werden können.

Die Erfindung soll das elektronische Überwachungssystem eines Fahrantriebes dahingehend verbessern, dass es Fehlerzustände auch bei bisher problematischen Fahrsituationen, z.B. beim Wegrollen an einer Steigung und bei dynamischen Fahrmanövern von Fahrzeugen, z.B. beim Ausrollen lassen von Radladern, zuverlässig und robust erkennt.

Diese Aufgaben werden gelöst durch ein elektronisches Überwachungssystem gemäß Anspruch 1 und durch einen hydrostatischen Fahrzeugantrieb gemäß Anspruch 5.

Das beanspruchte elektronische Überwachungssystem ist zur Überwachung eines hydrostatischen Fahrantriebs eines Fahrzeugs ausgelegt. Der hydrostatische Fahrantrieb weist ein Bedienelement auf, über das ein Stillstand-Signal oder ein Antriebslos-Signal an eine elektronische Steuereinheit des Überwachungssystems übermittelbar ist. Der Fahrantrieb hat weiterhin eine hydrostatische Pumpe und einen hydrostatischen Motor. Das Überwachungssystem hat einen Drehzahlsensor zur direkten oder indirekten Erfassung einer Motordrehzahl, aus der erfindungsgemäß über die Steuereinheit eine Beschleunigung des Motors und/oder des Fahrzeugs ermittelbar ist. Das Überwachungssystem weist weiterhin erfindungsgemäß zumindest einen ersten Drucksensor auf, über den ein erstes Drucksignal einer ersten Arbeitsleitung des Fahrantriebs an die Steuereinheit übermittelbar ist. Damit sind ein Antriebs-Zustand und/oder ein Antriebslos-Zustand des betroffenen Fahrantriebs ermittelbar. Der Antriebs-Zustand kann auch als aktiver Zustand und der Antriebslos-Zustand als passiver Zustand des Fahrantriebs bezeichnet werden. Damit ist das elektronische Überwachungssystem aus dem Stand der Technik dahingehend verbessert, dass es Fehlerzustände auch bei bisher problematischen Fahrsituationen, z.B. beim Wegrollen an einer Steigung und bei dynamischen Fahrmanövern des betroffenen Fahrzeugs, z.B. beim Ausrollen lassen von Radladern, zuverlässig und robust erkennt.

Angenommen der Fahrer bringt das Fahrzeug an einem steilen Hang zum Stillstand und fordert weiterhin Stillstand bzw. Antriebslosigkeit an. Wenn sich das Fahrzeug durch die Hangabtriebskraft wieder in Bewegung setzt, kann das erfindungsgemäße Überwachungssystem anhand der signifikanten Beschleunigung und des nicht signifikanten Drucksignals der als Zulauf zum Motor dienenden Arbeitsleitung erkennen, dass dabei kein Fehler des hydrostatischen Fahrantriebs vorliegt, weil dieser die Bewegung des Fahrzeugs nicht verursacht. Bisherige Lösungen sind nur einsetzbar, wenn eine Parkbremse solche Situationen verhindert.

Bei der bisherigen Lösung, bei der der Ansteuerstrom für die hydrostatische Pumpe überwacht wird, gibt es darüber hinausgehend den Nachteil, dass sie Fehler, die außerhalb der elektronischen Steuerung liegen, also beispielsweise im Ansteuergerät der Pumpe, nicht erkennen kann. Durch das erfindungsgemäße Überwachungssystem können auch Fehlerzustände erkannt werden, die durch Fehler außerhalb der elektronischen Steuerung verursacht werden.

Auch ein Defekt innerhalb der Pumpenansteuerung, der dafür sorgt, dass die Pumpe ausschwenkt und ein ungewolltes Antriebsdrehmoment erzeugt, kann durch die Auswertung des zumindest einen Drucksensors erkannt werden, da in diesem Fall ein signifikantes Drucksignal der als Zulauf zum Motor dienenden Arbeitsleitung erkannt wird. Bei der bisherigen Lösung, bei der nur die Ansteuerströme überwacht wurden, konnten solche Fehler nicht erkannt werden.

Wie oben erwähnt kann die Erfassung der Motordrehzahl durch den Drehzahlsensor auch indirekt erfolgen. Die ist z.B. der Fall, wenn zwischen dem hydrostatischen Motor und einem Differenzialgetriebe noch ein mechanisches Schaltgetriebe verbaut ist. Z.B. gibt es oft zwei mechanische Gänge, einen Transportgang (schnell) und einen Arbeitsgang (langsam), zwischen denen im Stillstand umgeschaltet werden kann (Stillstandsschaltgetriebe). Es gibt aber auch mechanische Getriebe, mit denen während der Fahrt geschaltet werden kann (z.B. "shift-on-fly" Getriebe). Der Drehzahlsensor kann dann auch auf der Ausgangswelle des Schaltgetriebes oder im Getriebe verbaut sein. Der Drehzahlsensor misst dann zwar nicht die Drehzahl des hydrostatischen Motors, sondern beispielsweise die Getriebeausgangsdrehzahl, aber die Erfindung funktioniert immer noch genauso, wenn man die Motordrehzahl durch die Getriebeausgangsdrehzahl ersetzt.

Außerdem können auch zwei hydrostatische Motoren mit einem mechanischen Summationsgetriebe zusammengeschaltet werden ("2+1 Summationsgetriebe"). Der Drehzahlsensor kann auch hier auf der Ausgangswelle des Schaltgetriebes oder im Getriebe verbaut sein. Die Erfindung ist auch hier anwendbar, wenn man die Getriebeausgangsdrehzahl anstatt der Motordrehzahl verwendet. Die beiden hydrostatischen Motoren mit dem Summationsgetriebe lassen sich effektiv wie ein einzelner hydrostatischer Motor behandeln.

Schließlich gibt es noch Varianten, bei denen die hydrostatischen Motoren direkt am Rad des Fahrzeugs verbaut sind. Hier entfällt dann im Prinzip nur das Achsgetriebe.

Das erfindungsgemäße Überwachungssystem hat bei einer besonders bevorzugten Weiterbildung einen zweiten Drucksensor, über den ein zweites Drucksignal einer zweiten Arbeitsleitung an die Steuereinheit übermittelbar ist. Damit kann mit dem erfindungsgemäßen Überwachungssystem ein bidirektionaler Fahrantrieb mit einem geschlossenen hydraulischen Kreis überwacht werden. Das Überwachungssystem kann feststellen, dass die zweite Arbeitsleitung unter signifikantem Druck steht, und so auch aktive Rückwärtsfahrt des zu überwachenden Fahrantriebs erkennen. Falls dabei vom Fahrer über das Bedienelement Stillstand bzw. Antriebslosigkeit angefordert ist, wird der Fehler erkannt.

Vorzugsweise sind auch ein Vorwärtssignal und ein Rückwärtssignal von dem Bedienelement an die elektronische Steuereinheit übermittelbar. Dann kann mit dem zweiten Drucksensor an der zweiten Arbeitsleitung auch eine aktive Rückwärtsfahrt bei einem Vorwärtssignal des Bedienelements bzw. eine aktive Vorwärtsfahrt bei einem Rückwärtssignal des Bedienelements erkannt werden. Damit bietet das erfindungsgemäße Überwachungssystem auch eine "Safe Direction" und eine "Safe Reversing" Funktion.

Der beanspruchte hydrostatische Fahrantrieb für ein Fahrzeug weist ein Bedienelement auf, über das ein Stillstand-Signal oder ein Antriebslos-Signal an eine elektronische Steuereinheit eines elektronischen Überwachungssystems übermittelbar ist. Der Fahrantrieb hat eine hydrostatische Pumpe und einen hydrostatischen Motor. Das Überwachungssystem hat einen Drehzahlsensor zur Erfassung einer Motordrehzahl, aus der erfindungsgemäß über die Steuereinheit eine Beschleunigung des Motors und/oder des Fahrzeugs ermittelbar ist. Erfindungsgemäß hat das Überwachungssystem einen ersten Drucksensor, über den ein erstes Drucksignal einer ersten Arbeitsleitung des Fahrantriebs an die Steuereinheit übermittelbar ist. Damit sind ein Antriebs-Zustand und/oder ein Antriebslos-Zustand des Fahrantriebs ermittelbar. Der Antriebs-Zustand kann auch als aktiver Zustand und der Antriebslos-Zustand als passiver Zustand des erfindungsgemäßen Fahrantriebs bezeichnet werden. Die Vorteile des erfindungsgemäßen Fahrantriebs entsprechen denjenigen des vorbeschriebenen Überwachungssystems.

Der erfindungsgemäße Fahrantrieb hat bei einer besonders bevorzugten bidirektionalen Weiterbildung einen geschlossenen hydraulischen Kreis mit einer zweiten Arbeitsleitung. Dann weist das Überwachungssystem einen zweiten Drucksensor auf, über den ein zweites Drucksignal der zweiten Arbeitsleitung an die Steuereinheit übermittelbar ist. Damit ist auch das Überwachungssystem bidirektional. und kann feststellen, dass die zweite Arbeitsleitung unter signifikantem Druck steht, und so z.B. aktive Rückwärtsfahrt des erfindungsgemäßen Fahrantriebs erkennen. Falls dabei vom Fahrer über das Bedienelement Stillstand bzw. Antriebslosigkeit angefordert ist, wird der Fehler erkannt.

Bei dem erfindungsgemäßen Überwachungssystem und bei dem erfindungsgemäßen Fahrantrieb ist vorzugsweise von der Steuereinheit eine Druckdifferenz zwischen dem ersten und dem zweiten Drucksignal ermittelbar. Dann ist von der Steuereinheit ein Fehler ermittelbar, wenn von der Bedieneinheit das Stillstand-Signal oder das Antriebslos-Signal an die Steuereinheit übermittelt ist, und wenn zusätzlich folgende drei Bedingungen erfüllt sind:

- Motordrehzahl ist größer Null, woraus eine Vorwärtsfahrt gefolgert wird, und
- Druckdifferenz ist größer oder gleich einem Referenzwert für die Druckdifferenz, und
- Beschleunigung (des Motors oder des Fahrzeugs) ist größer als ein Referenzwert für die Beschleunigung.

Bei dem erfindungsgemäßen Überwachungssystem und bei dem erfindungsgemäßen Fahrantrieb ist auch ein Fehler ermittelbar, wenn von der Bedieneinheit das Stillstand-Signal oder das Antriebslos-Signal an die Steuereinheit übermittelt ist, und wenn zusätzlich folgende drei Bedingungen erfüllt sind:

- Motordrehzahl ist kleiner Null, woraus eine Rückwärtsfahrt gefolgert werden kann, und

- Druckdifferenz ist kleiner oder gleich dem oben genannten aber negativen Referenzwert für die Druckdifferenz, und
- Beschleunigung ist kleiner als der oben genannte aber negative Referenzwert für die Beschleunigung.

Bei dem erfindungsgemäßen Überwachungssystem und bei dem erfindungsgemäßen Fahrantrieb ist das Bedienelement, von dem das Stillstand-Signal oder das Antriebslos-Signal an die Steuereinheit übermittelt ist, z.B. ein Fahrtrichtungshebel in einer Neutral-Stellung oder ein Fahrpedal in einer Nullposition oder ein Inch-Pedal in einer Maximalposition.

Bei dem erfindungsgemäßen Überwachungssystem und bei dem erfindungsgemäßen Fahrantrieb kann die Pumpe eine ET-Pumpe sein. Dann wird eine nicht steife und nicht pedalgeführte Ansteuerung der ET-Pumpe über einen Steuerdruck bevorzugt. Andere Ansteuerarten wie z.B. eine EP-Pumpe sind auch möglich.

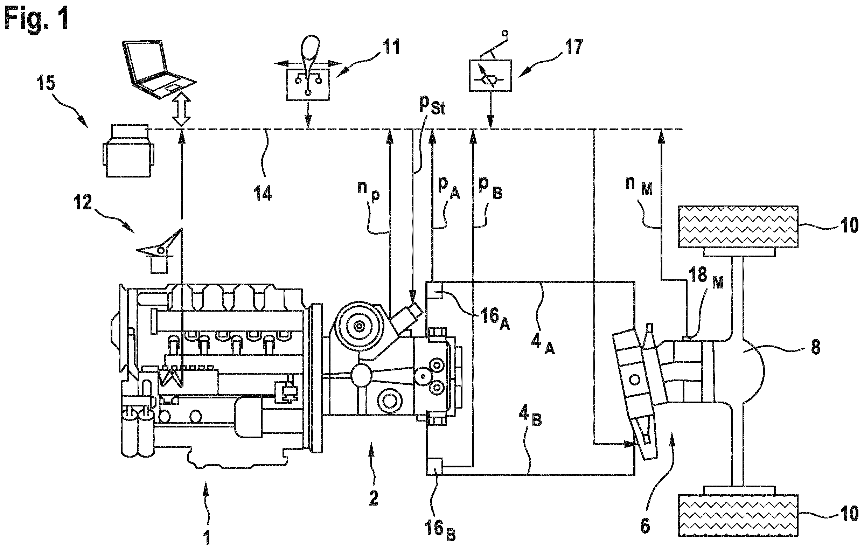

Figur 1 zeigt das Ausführungsbeispiel des erfindungsgemäßen Fahrantriebs für eine mobile Arbeitsmaschine, die z.B. ein Radlader sein kann. Die mobile Arbeitsmaschine hat einen Dieselmotor 1, an dessen (nicht näher gezeigte) Kurbelwelle eine in ihrem Hubvolumen verstellbare Axialkolbenpumpe 2 gekoppelt ist. Diese versorgt in einem geschlossenen Kreis über zwei Arbeitsleitungen $4_A$, $4_B$ einen Motor 6, dessen Abtriebswelle über ein Differenzialgetriebe 8 an zwei Räder 10 gekoppelt ist. Die Pumpe 2, die beiden Arbeitsleitungen $4_A$, $4_B$ und der Motor 6 sind dem erfindungsgemäßen Fahrantrieb zuzurechnen.

Ein Fahrpedal 12 ist beim gezeigten Ausführungsbeispiel mechanisch an den Dieselmotor 1 gekoppelt.

Weiterhin hat der erfindungsgemäße Fahrantrieb eine zentrale Datenleitung 14, an die eine elektronische Steuereinheit 15 angeschlossen ist. Über die zentrale Datenleitung 14 werden Positionsdaten bzw. Positionssignale des Fahrpedals 12, eines Fahrtrichtungshebels 11 und eines Inch-Pedals 17 übermittelt. Das Inch-Pedal 17 dient zur Bevorzugung von Verbrauchern der mobilen Arbeitsmaschine gegenüber dem Fahrantrieb.

Weiterhin werden über die zentrale Datenleitung 14 Drucksignale eines ersten Drucksensors $16_A$ und eines zweiten Drucksensors $16_B$ an die Steuereinheit 15 übertragen. Die beiden Drucksensoren $16_A$, $16_B$ sind an den beiden Hauptanschlüssen der Pumpe 2 angeordnet und erfassen den Arbeitsdruck der jeweiligen Arbeitsleitung $4_A$, $4_B$.

Weiterhin werden an die Steuereinheit 15 von einem (nicht gezeigten) Drehzahlsensor eine Pumpendrehzahl $n_P$ und von einem Drehzahlsensor $18_M$ eine Motordrehzahl $n_M$ übertragen.

Von der Steuereinheit 15 wird über die zentrale Datenleitung 14 ein Steuerdrucksignal $p_{St}$ übermittelt, wobei die Pumpe 2 als ET-Pumpe ausgebildet ist.

Bei einem bevorzugten alternativen Ausführungsbeispiel wird die Pumpe 2 nicht über die zentrale Datenleitung 14 angesteuert, sondern über zwei separate elektrische Leitungen (nicht näher gezeigt), über die zwei Steuerstromsignale für Magnetventile der Pumpe 2 übertragen werden.

Als Beispiel wird die Sicherheitsfunktion "Sicherer Stillstand" bzw. sichere Antriebslosigkeit des gezeigten Ausführungsbeispiels des erfindungsgemäßen Fahrantriebs erläutert. Die Sicherheitsfunktion verhindert vom Fahrer nicht gewollte aktive Beschleunigung der mobilen Arbeitsmaschine durch den Fahrantrieb.

Die folgenden Bedienelemente des Fahrers werden von der Steuereinheit 15 ausgewertet:

- Fahrtrichtungshebel 11,
- Fahrpedal 12 und
- Inch-Pedal 17.

Der Fahrer fordert Stillstand bzw. Antriebslosigkeit an, wenn mindestens eine der folgenden Bedingungen erfüllt ist:

- Fahrtrichtungshebel 11 ist in Stellung "neutral",
- Fahrpedal 12 ist in Nullposition oder
- Inch-Pedal 17 ist in Maximalposition.

Andere Bedienelemente wie z.B. ein Creep Potentiometer und deren Auswertung sind auch möglich.

Insbesondere dann werden die folgenden Sensoren ausgewertet:

- Drehzahlsensor $18_M$ am hydrostatischen Motor 6 (Symbol für die Motordrehzahl: $n_M$),
- Erster Drucksensor $16_A$ an der hydrostatischen Pumpe 2 bzw. an der ersten Arbeitsleitung $4_A$ (Symbol für den ersten Druck: $p_A$) und
- Zweiter Drucksensor $16_B$ an der hydrostatischen Pumpe 2 bzw. an der zweiten Arbeitsleitung $4_B$ (Symbol für den zweiten Druck: $p_B$).

Aus dem Drehzahlsignal $n_M$ wird außerdem numerisch die Beschleunigung a berechnet. Genauer gesagt wird die Drehbeschleunigung des Motors 6 ermittelt und daraus ggf. numerisch die Beschleunigung der mobilen Arbeitsmaschine errechnet. Aus den beiden Drucksignalen $p_A$ und $p_B$ wird noch die Druckdifferenz $\Delta p$ gebildet.

Die Druckdifferenz $\Delta p$ wird per Konvention immer so berechnet, dass eine positive Druckdifferenz $\Delta p$ ein aktives Antriebsdrehmoment in Vorwärtsrichtung bedeutet. Das ist wichtig für die Formulierung der Fehlerbedingung für die Druckdifferenz $\Delta p$. Je nach Einbauposition der Drucksensoren $16_A$, $16_B$ und Verschlauchung des hydrostatischen Fahrantriebs ist also $\Delta p = p_A - p_B$ oder $\Delta p = p_B - p_A$.

Wenn der Fahrer über eines der oben genannten Bedienelemente Stillstand bzw. Antriebslosigkeit anfordert, und eine der beiden folgenden Bedingungen erfüllt ist, dann liegt ein Fehler vor, der von dem erfindungsgemäßen Überwachungssystem erkannt wird.

1. $\qquad (n_M > 0)$ und $(\Delta p >= \Delta p_{Ref})$ und $(a > -a_{Ref})$

2. $\qquad (n_M < 0)$ und $(\Delta p <= -\Delta p_{Ref})$ und $(a < a_{Ref})$

$\Delta p_{Ref}$ und $a_{Ref}$ sind Referenzwerte für Druckdifferenz und Beschleunigung, die auch von der Zeit abhängen können. Die erste Bedingung bedeutet, dass die mobile Arbeitsmaschine vorwärts fährt, und dabei eine signifikante oder zu große Druckdifferenz $\Delta p$ (relativ zum Referenzwert $\Delta p_{Ref}$) vorliegt, aus der ein signifikantes oder zu großes antreibendes Drehmoment nach vorne gefolgert wird (relativ zum Referenzwert), und dabei die Beschleunigung a nach vorne signifikant oder zu groß ist (relativ zum Referenzwert $-a_{Ref}$).

Im Falle des in Figur 1 gezeigten bidirektionalen Fahrantriebs mit geschlossenem Kreis gilt die zweite Bedingung analog für Rückwärtsfahrt. Die zweite Bedingung bedeutet also, dass die mobile Arbeitsmaschine rückwärts fährt, und dabei eine signifikante oder zu große Druckdifferenz $\Delta p$ (relativ zum Referenzwert $-\Delta p_{Ref}$) vorliegt. Daraus wird ein signifikantes bzw. zu großes antreibendes Drehmoment nach hinten (relativ zum Referenzwert) gefolgert. Dabei ist die Beschleunigung a nach hinten signifikant bzw. zu groß (relativ zum Referenzwert $a_{Ref}$).

Wenn auf diese Weise der Fehler von dem Überwachungssystem erkannt wird, schaltet die elektronische Steuereinheit 15 alle elektrischen Ausgänge ab, um den Fahrantrieb endgültig abzuschalten und die mobile Arbeitsmaschine in einen sicheren Zustand zu bringen.

Offenbart sind ein Überwachungssystem für einen Fahrantrieb und ein Fahrantrieb mit einem Überwachungssystem. Mittels eines Drehzahlsensors eines hydrostatischen Motors wird eine Beschleunigung ermittelt, und zusätzlich wird noch zumindest ein Drucksensor ausgewertet, der an der mindestens einen Arbeitsleitung, die die Pumpe mit dem Motor des hydrostatischen Fahrantriebs verbindet, installiert ist. Vorzugsweise ist der Drucksensor an dem zumindest einen Arbeitsanschluss der Pumpe angeordnet. Mit Hilfe des zusätzlichen Drucksignals kann zuverlässig bewertet werden, ob der hydrostatische Fahrantrieb ein ungewolltes antreibendes Antriebsdrehmoment erzeugt oder nicht.

**Patentansprüche**

1. Elektronisches Überwachungssystem für einen hydrostatischen Fahrantrieb, der ein Bedienelement aufweist, über das ein Stillstand-Signal oder ein Antriebslos-Signal an eine elektronische Steuereinheit (15) des Überwachungssystems übermittelbar ist, und der eine hydrostatische Pumpe (2) und einen hydrostatischen Motor (6) aufweist, wobei das Überwachungssystem einen Drehzahlsensor ($18_M$) zur Erfassung einer Motordrehzahl ($n_M$) aufweist, **dadurch gekennzeichnet, dass** aus der Motordrehzahl ($n_M$) über die Steuereinheit (15) eine Beschleunigung (a) des Motors (6) ermittelbar ist, und dass das Überwachungssystem einen ersten Drucksensor ($16_A$) aufweist, über den ein erster Druck ($p_A$) einer ersten Arbeitsleitung ($4_A$) des Fahrantriebs an die Steuereinheit (15) übermittelbar ist, womit ein Antriebs-Zustand und/oder ein Antriebslos-Zustand des Fahrantriebs ermittelbar ist.

2. Überwachungssystem nach Anspruch 1 mit einem zweiten Drucksensor ($16_B$), über den ein zweiter Druck ($p_B$) einer zweiten Arbeitsleitung ($4_B$) an die Steuereinheit (15) übermittelbar ist.

3. Überwachungssystem nach Anspruch 2, wobei von der Steuereinheit (15) eine Druckdifferenz $\Delta p$ zwischen dem ersten Druck ($p_A$) und dem zweiten Druck ($p_B$) ermittelbar ist, und wobei von der Steuereinheit (15) ein Fehler ermittelbar ist, wenn von der Bedieneinheit das Stillstand-Signal oder das Antriebslos-Signal an die Steuereinheit übermittelt ist, und wenn zusätzlich folgende drei Bedingungen erfüllt sind:

Motordrehzahl ($n_M$) > 0 und
Druckdifferenz ($\Delta p$) >= $\Delta p_{Ref}$ und
Beschleunigung (a) > $-a_{Ref}$.

4. Überwachungssystem nach Anspruch 2 oder 3, wobei von der Steuereinheit eine Druckdifferenz $\Delta p$ zwischen dem ersten Druck ($p_A$) und dem zweiten Druck ($p_B$) ermittelbar ist, und wobei von der Steuereinheit (15) ein Fehler ermittelbar ist, wenn von der Bedieneinheit das Stillstand-Signal oder das Antriebslos-Signal an die Steuereinheit übermittelt ist, und wenn zusätzlich folgende drei Bedingungen erfüllt sind:

Motordrehzahl ($n_M$) < 0 und
Druckdifferenz ($\Delta p$) <= $-\Delta p_{Ref}$ und
Beschleunigung (a) < $a_{Ref}$.

5. Hydrostatischer Fahrantrieb der ein Bedienelement aufweist, über das ein Stillstand-Signal oder ein Antriebslos-Signal an eine elektronische Steuereinheit (15) eines elektronischen Überwachungssystems übermittelbar ist, wobei der Fahrantrieb eine hydrostatische Pumpe (2) und einen hydrostatischen Motor (6) aufweist, und wobei das Überwachungssystem einen Drehzahlsensor ($18_M$) zur Erfassung einer Motordrehzahl ($n_M$) aufweist, **dadurch gekennzeichnet, dass** aus der Motordrehzahl ($n_M$) über die Steuereinheit (15) eine Beschleunigung (a) des Motors (6) ermittelbar ist, und dass das Überwachungssystem einen ersten Drucksensor ($16_A$) aufweist, über den ein erster Druck ($p_A$) einer ersten Arbeitsleitung ($4_A$) des Fahrantriebs an die Steuereinheit (15) übermittelbar ist, womit ein Antriebs-Zustand und/oder ein Antriebslos-Zustand des Fahrantriebs ermittelbar ist.

6. Fahrantrieb nach Anspruch 5, der einen geschlossenen Kreis mit einer zweiten Arbeitsleitung ($4_B$) aufweist, wobei das Überwachungssystem einen zweiten Drucksensor ($16_B$) aufweist, über den ein zweiter Druck ($p_B$) der zweiten Arbeitsleitung ($4_B$) an die Steuereinheit (15) übermittelbar ist.

7. Fahrantrieb nach Anspruch 6, wobei von der Steuereinheit (15) eine Druckdifferenz $\Delta p$ zwischen dem ersten Druck ($p_A$) und dem zweiten Druck ($p_B$) ermittelbar ist, und wobei von der Steuereinheit (15) ein Fehler ermittelbar ist, wenn von der Bedieneinheit das Stillstand-Signal oder das Antriebslos-Signal an die Steuereinheit (15) übermittelt ist, und wenn zusätzlich folgende drei Bedingungen erfüllt sind:

Motordrehzahl ($n_M$) > 0 und
Druckdifferenz ($\Delta p$) >= $\Delta p_{Ref}$ und
Beschleunigung (a) > $-a_{Ref}$.

8. Fahrantrieb nach Anspruch 6 oder 7, wobei von der Steuereinheit (15) eine Druckdifferenz $\Delta p$ zwischen dem ersten Druck ($p_A$) und dem zweiten Druck ($p_B$) ermittelbar ist, und wobei von der Steuereinheit (15) ein Fehler ermittelbar ist, wenn von der Bedieneinheit das Stillstand-Signal oder das Antriebslos-Signal an die Steuereinheit des Überwachungssystems übermittelt ist, und wenn zusätzlich folgende drei Bedingungen erfüllt sind:

Motordrehzahl ($n_M$) < 0 und
Druckdifferenz ($\Delta p$) <= $-\Delta p_{Ref}$ und
Beschleunigung (a) < $a_{Ref}$.

9. Fahrantrieb nach einem der Ansprüche 5 bis 8, wobei das Bedienelement ein Fahrtrichtungshebel (11) in einer Neutral-Stellung ist, oder wobei das Bedienelement ein Fahrpedal (12) in einer Nullposition ist, oder wobei das Bedienelement ein Inch-Pedal (17) in einer Maximalposition ist.

10. Fahrantrieb nach einem der Ansprüche 5 bis 9 wobei die Pumpe (2) eine ET-Pumpe ist, und wobei eine nicht steife und nicht pedalgeführte Ansteuerung der ET-Pumpe über einen Steuerdruck (pst) vorgesehen ist.


**Claims**

1. Electronic monitoring system for a hydrostatic travel drive which has an operating element, by means of which a standstill signal or a no-drive signal can be transmitted to an electronic control unit (15) of the monitoring system, and which has a hydrostatic pump (2) and a hydrostatic motor (6), wherein the monitoring system has a revolution rate sensor ($18_M$) for detecting a motor revolution rate ($n_M$), **characterized in that** an acceleration (a) of the motor (6) can be determined from the motor revolution rate ($n_M$) by means of the control unit (15), and **in that** the monitoring system has a first pressure sensor ($16_A$), by means of which a first pressure ($p_A$) of a first working line ($4_A$) of the travel drive can be transmitted to the control unit (15), whereby a drive state and/or a no-drive state of the travel drive can be determined.

2. Monitoring system according to Claim 1 with a second pressure sensor ($16_B$), by means of which a second pressure ($p_B$) of a second working line ($4_B$) can be transmitted to the control unit (15).

3. Monitoring system according to Claim 2, wherein a pressure difference $\Delta p$ between the first pressure ($p_A$) and the second pressure ($p_B$) can be determined by the control unit (15), and wherein an error can be determined by the control unit (15) when the standstill signal or the no-drive signal is transmitted to the control unit from the operating unit, and when additionally the following three conditions are met:

   motor revolution rate ($n_M$) > 0 and
   pressure difference ($\Delta p$) >= $\Delta p_{Ref}$ and
   acceleration (a) > -$a_{Ref}$.

4. Monitoring system according to Claim 2 or 3, wherein a pressure difference $\Delta p$ between the first pressure ($p_A$) and the second pressure ($p_B$) can be determined by the control unit, and wherein an error can be determined by the control unit (15) when the standstill signal or the no-drive signal is transmitted to the control unit from the operating unit, and when additionally the following three conditions are met:

   motor revolution rate ($n_M$) < 0 and
   pressure difference ($\Delta p$) <= -$\Delta p_{Ref}$ and
   acceleration (a) < $a_{Ref}$.

5. Hydrostatic travel drive which has an operating element, by means of which a standstill signal or a no-drive signal can be transmitted to an electronic control unit (15) of an electronic monitoring system, wherein the travel drive has a hydrostatic pump (2) and a hydrostatic motor (6), and wherein the monitoring system has a revolution rate sensor ($18_M$) for detecting a motor revolution rate ($n_M$), **characterized in that** an acceleration (a) of the motor (6) can be determined from the motor revolution rate ($n_M$) by means of the control unit (15), and **in that** the monitoring system has a first pressure sensor ($16_A$), by means of which a first pressure ($p_A$) of a first working line ($4_A$) of the travel drive can be transmitted to the control unit (15), whereby a drive state and/or a no-drive state of the travel drive can be determined.

6. Travel drive according to Claim 5, which has a closed circuit with a second working line ($4_B$), wherein the monitoring system has a second pressure sensor ($16_B$), by means of which a second pressure ($p_B$) of the second working line ($4_B$) can be transmitted to the control unit (15) .

7. Travel drive according to Claim 6, wherein a pressure difference $\Delta p$ between the first pressure ($p_A$) and the second pressure ($p_B$) can be determined by the control unit (15), and wherein an error can be determined by the control unit (15) when the standstill signal or the no-drive signal is transmitted to the control unit (15) from the operating unit, and when additionally the following three conditions are met:

   motor revolution rate ($n_M$) > 0 and
   pressure difference ($\Delta p$) >= $\Delta p_{Ref}$ and
   acceleration (a) > -$a_{Ref}$.

8. Travel drive according to Claim 6 or 7, wherein a pressure difference $\Delta p$ between the first pressure ($p_A$) and the second pressure ($p_B$) can be determined by the control unit (15), and wherein an error can be determined by the control unit (15) when the standstill signal or the no-drive signal is transmitted to the control unit of the monitoring system from the operating unit, and when additionally the following three conditions are met:

   motor revolution rate ($n_M$) < 0 and
   pressure difference ($\Delta p$) <= -$\Delta p_{Ref}$ and
   acceleration (a) < $a_{Ref}$.

9. Travel drive according to any one of Claims 5 to 8, wherein the operating element is a direction of travel lever (11) in a neutral position, or wherein the operating element is a gas pedal (12) in a zero position, or wherein the operating element is an inch pedal (17) in a maximum position.

10. Travel drive according to any one of Claims 5 to 9, wherein the pump (2) is an ET pump, and wherein non-stiff and non-pedal-driven control of the ET pump is provided via a control pressure ($p_{St}$).

**Revendications**

1. Système de surveillance électronique pour un système d'entraînement hydrostatique qui présente un élément d'actionnement par lequel un signal d'arrêt ou un signal sans entraînement peut être transmis à une unité de commande électronique (15) du système de surveillance, et qui présente une pompe hydrostatique (2) et un moteur hydrostatique (6), le système de surveillance présentant un capteur de vitesse de rotation ($18_M$) permettant de détecter une vitesse de rotation du moteur ($n_M$),
   **caractérisé en ce qu'**une accélération (a) du moteur (6) peut être déterminée à partir de la vitesse de rotation du moteur ($n_M$) par l'intermédiaire de l'unité de commande (15), et **en ce que** le système de surveillance présente un premier capteur de pression ($16_A$) par lequel une première pression ($p_A$) d'une première conduite de travail ($4_A$) du système d'entraînement peut être transmise à l'unité de commande (15), ce qui permet de déterminer un état d'entraînement et/ou un état sans entraînement du système d'entraînement.

2. Système de surveillance selon la revendication 1, comprenant un deuxième capteur de pression ($16_B$) par lequel une deuxième pression ($p_B$) d'une deuxième conduite de travail ($4_B$) peut être transmise à l'unité de commande (15).

3. Système de surveillance selon la revendication 2, dans lequel l'unité de commande (15) permet de déterminer une différence de pression $\Delta p$ entre la première pression ($p_A$) et la deuxième pression ($p_B$), et dans lequel l'unité de commande (15) peut déterminer un défaut si l'unité d'actionnement transmet le signal d'arrêt ou le signal sans entraînement à l'unité de commande, et si en plus les trois conditions suivantes sont remplies:

   vitesse de rotation du moteur ($n_M$) > 0, et
   différence de pression ($\Delta p$) $\geq \Delta p_{Ref}$, et
   accélération (a) > $-a_{Ref}$.

4. Système de surveillance selon la revendication 2 ou 3, dans lequel l'unité de commande peut déterminer une différence de pression $\Delta p$ entre la première pression ($p_A$) et la deuxième pression ($p_B$), et l'unité de commande (15) pouvant déterminer un défaut si le signal d'arrêt ou le signal sans entraînement est transmis à l'unité de commande par l'unité d'actionnement, et si en plus les trois conditions suivantes sont remplies :

   vitesse de rotation du moteur ($n_M$) < 0, et
   différence de pression ($\Delta p$) $\leq -\Delta p_{Ref}$, et
   accélération (a) < $a_{Ref}$.

5. Système d'entraînement hydrostatique qui présente un élément d'actionnement par lequel un signal d'arrêt ou un signal sans entraînement peut être transmis à une unité de commande électronique (15) d'un système de surveillance électronique, le système d'entraînement présentant une pompe hydrostatique (2) et un moteur hydrostatique (6), et le système de surveillance présentant un capteur de vitesse de rotation ($18_M$) permettant de détecter une vitesse de rotation du moteur ($n_M$),
   **caractérisé en ce qu'**une accélération (a) du moteur (6) peut être déterminée à partir de la vitesse de rotation du moteur ($n_M$) par l'intermédiaire de l'unité de commande (15), et **en ce que** le système de surveillance présente un premier capteur de pression ($16_A$) par lequel une première pression ($p_A$) d'une première conduite de travail ($4_A$) du système d'entraînement peut être transmise à l'unité de commande (15), ce qui permet de déterminer un état d'entraînement et/ou un état sans entraînement du système d'entraînement.

6. Système d'entraînement selon la revendication 5, qui présente un circuit fermé avec une deuxième conduite de travail ($4_B$), le système de surveillance présentant un deuxième capteur de pression ($16_B$) par lequel une deuxième pression ($p_B$) de la deuxième conduite de travail ($4_B$) peut être transmise à l'unité de commande (15).

7. Système d'entraînement selon la revendication 6, dans lequel l'unité de commande (15) permet de déterminer une différence de pression $\Delta p$ entre la première pression ($p_A$) et la deuxième pression ($p_B$), et l'unité de commande (15) permettant de déterminer un défaut si le signal d'arrêt ou le signal sans entraînement est transmis à l'unité de commande (15) par l'unité d'actionnement, et si en plus les trois conditions suivantes sont remplies :

   vitesse de rotation du moteur ($n_M$) > 0, et
   différence de pression ($\Delta p$) $\geq \Delta p_{Ref}$, et
   accélération (a) > $-a_{Ref}$.

**8.** Système d'entraînement selon la revendication 6 ou 7, dans lequel l'unité de commande (15) permet de déterminer une différence de pression Δp entre la première pression ($p_A$) et la deuxième pression ($p_B$), et l'unité de commande (15) permettant de déterminer un défaut si le signal d'arrêt ou le signal sans entraînement est transmis à l'unité de commande du système de surveillance par l'unité d'actionnement, et si en plus les trois conditions suivantes sont remplies :

vitesse de rotation du moteur ($n_M$) < 0, et
différence de pression (Δp) $\leq$ -$\Delta p_{Ref}$, et
accélération (a) < $a_{Ref}$.

**9.** Système d'entraînement selon l'une quelconque des revendications 5 à 8, dans lequel l'élément d'actionnement est un sélecteur de marche (11) dans une position neutre, ou dans lequel l'élément d'actionnement est une pédale d'accélérateur (12) en position zéro, ou dans lequel l'élément d'actionnement est une pédale d'approche (17) dans une position maximale.

**10.** Système d'entraînement selon l'une quelconque des revendications 5 à 9, dans lequel la pompe (2) est une pompe ET, et dans lequel un pilotage non rigide et non guidé par pédale de la pompe ET par l'intermédiaire d'une pression de commande ($p_{st}$) est prévu.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008021313 A1